# EUROPEAN PATENT SPECIFICATION

(11) **EP 0 423 405 B1**
(45) Date of publication and mention of the grant of the patent: **15.12.1993**
(21) Application number: 89310690.6
(22) Date of filing: 18.10.1989
(51) Int. Cl.: B29C 49/24

(54) **Label applying apparatus of rotary blow molding machine**
Etikettiervorrichtung einer Rotations-Blasformmasschine
Dispositif d'étiquetage d'une machine rotative de moulage par soufflage

(43) Date of publication of application: 24.04.1991
(73) Proprietor: TOYO SEIKAN KAISHA, LTD., Tokyo 100 (JP)
(72) Inventor: Takakusaki, Nobuyuki, Yokohama-shi Kanagawa-Ken (JP); Mizutani, Yohji, Suginami-Ku Tokyo-To (JP); Hosakawa, Manabu, Kawasaki-Shi Kanagawa-Ken (JP)
(74) Representative: Barnard, Eric Edward

(56) References cited:
- WO-A-83/01414
- WO-A-90/00138
- US-A- 4 293 365
- US-A- 4 359 314
- US-A- 4 479 771

## Description

### BACKGROUND OF THE INVENTION

This invention relates to a label mounting or applying apparatus of a rotary blow molding machine particularly in which a label or labels are positioned on the inner walls of a pair of splittable mold halves which are rotatable on the circular track at a constant speed and are to be opened or closed, and the label is applied on a product in a fusing manner during the blow molding operation.

There is known a rotary blow molding machine in which a plurality of split mold units each comprising a pair of splittable mold halves capable of being opened or clased in a horizontal axis are disposed with equal spaces along the outer periphery of a rotor rotatable around the horizontal axis. A parison is extruded into the opened mold halves, which are then closed, and air is blowed into the inner hollow portion of the parison to form a hollow product.

The rotary blow molding machine of the character described above is generally utilized for molding a plastic vessel or container. A label is usually mounted or pasted on the plastic container for indicating the content thereof. With a method of bonding the label with a bonding agent on the container after the molding process, the manufacturing cost increases for the reason that the label bonding process is additionally carried out after the blow molding process, and in addition, it is can be difficult to establish a firm bond between the label and the container. For the reason described above, there is also provided a method of fusing the label to the container by pressing a highly heated molding material to the label in the molding process of the container.

That is, for example, U.S. Patent No. 4,479,770 discloses a label applying device which is provided with a shrinkable label carrier attached to a dispensing head reciprocating vertically between a label magazine and opened splittable mold halves and in which the label is transferred from the label magazine to the inner wall of the splittable mold halves during the combined two reciprocating movements.

The disclosed label applying device has a complicated driving mechanism and the dispensing head is reciprocated along a long path, so that a large driving force is required for the inertia motion.

An object of this invention is to improve the problem described above and to provide a label applying apparatus in a rotary blow molding machine capable of being driven with a small driving force and having a simple structure.

Furthermore, with the rotary blow molding machine, it is necessary to clamp a pair of closed mold halves with a pressure overcoming pressure air blown into the mold. Such clamping device is disclosed in U.S. Patent No. 3,764,250, for example.

In the disclosed clamping device, a mold holder for holding a pair of splittable mold halves is clamped by a stationary cam through a slider crank mechanism and a compression spring.

In the clamping device of the type described, a cam follower engaged with the stationary cam is to be operated against the force of the compression spring, so that it is required for driving the cam follower supported by the rotor to apply a large driving force, and the driving force of the rotor is largely changed by a variable load for the cam follower to thereby vary the rotation speed of the rotor. The exact positioning of the label in the splittable mold is a matter of significance

In addition, the treatment of scrap such as faulty products occurring in the initial stage of the blow molding process is carried out in a working space exsiting between a mold opening starting potion and a molded product take-out device (this working space is essential for the mechanism of the blow molding machine).

The working space is not necessary after establishing the normal molding stage elapsing the initial molding stage, but the timings of the mold closing and the mold opening are controlled by the cam of single shape, so that the mold halves are opened at a period similar to the initial molding period after having established the normal molding stage to adversely reduce the blow molding period after the normal molding condition being established (i.e. to reduce the rotation angle of the split unit in the closed state), thus being inconvenient.

WO 83/01414 describes a label applying apparatus for use in a rotary blow molding machine. The blow molding machine comprises a plurality of split mold units each comprising a pair of splittable mold halves. The units are equidistantly spaced about an outer periphery of a rotor. The mold halves are capable of being opened and closed about a parison extruded into the halves. Air can be blown into an inner hollow portion of the contained parison to form a hollow product. The label applying apparatus has a label magazine for storing labels. The labels are picked up from the label magazine by suction heads of pick-up arms. The pick-up arms are slidable between the pick-up position and a position where the label is discharged into a mold half.

### SUMMARY OF THE INVENTION

An object of this invention is to eliminate the problem described above and to provide a label applying apparatus in a rotary blow molding machine capable of exactly positioning the label on the inner wall of the split mold and manufacturing products with high quality by utilizing a clamping device in which the variation of the load for driving the rotor is reduced and the blow molding period in the normal operation condition is possibly elongated.

Another object of this invention is to provide a label applying apparatus of a rotary molding machine suitably operated in association with a mold unit holding mechanism to improve the working space in the blow molding processes.

According to the invention there is provided a label applying apparatus in a rotary blow molding machine,
the blow molding machine comprising a plurality of split mold units each comprising a pair of splitable mold halves equidistantly spaced about an outer periphery of a rotor rotatable about a horizontal axis, the mold halves capable of being opened and closed in th4e direction of the horizontal axis, the mold halves being closable about a parison extruded into the halves, means for blowing air into an inner hollow portion of the parison contained within the closed mold halves to form a hollow product, the label applying apparatus comprising a rotatable shaft disposed in parallel to the axis of rotation of the rotor means for intermittently unidirectionally driving the shaft a predetermined angle two parallel link mechanisms secured to the shaft so as to be swingable with an angular interval of 180° with respect to the axis means for taking a thermally fusible label from a label magazine in which a number of labels are stored,
means attached to the link mechanisms for sucking the labels from the label take out means, means for swingably displacing the link mechanisms to positions for transferring the label to a predetermined position on an inner wall of the split mold halves and means for application of the highly heated moldable label to the product.

By this construction of the label applying apparatus in which the cable is transferred to the inner wall of the mold halves by the combination of rotating motion and swinging motion, the reciprocating motion along the long length of the heavy member can be eliminated, so that the driving force therefor can be reduced and the apparatus can be made compact and enable the apparatus to operate with a high speed.

In an embodiment of the invention a pair of mold unit holders for holding bilateral mold halves respectively are slidably supported by a guide rod mounted to the rotor, one of the holders being operatively connected to the guide rod through the slidable supported slider and a hydraulic cylinder unit and the other one of the holders being operatively connected to the slider through a lever so as to move in a direction opposing to the movement of the slider. The slider support is connected to a cam follower engaging with a clamping control cam assembly arranged near the rotor through a slider-crank mechanism supported by the rotor to be movable in a radial direction thereof and to be positioned at a dead position, and the clamping force is applied to the mold holders by the hydraulic cylinder unit when the slider-crank mechanism is positioned at the dead position. In this construction of the clamping device, the clamping force is not applied to the slider-crank mechanism for driving the mold holders and the cam follower till the slider-crank mechanism is positioned to the dead position, and accordingly, when the clamping force is applied by the hydraulic cylinder unit, the slider crank mechanism is in the dead position, so that the clamping force is accepted by the fulcrum of the slider-crank mechanism, so that the clamping force is never applied to the cam follower.

Accordingly, a large force is never applied to the cam follower held by the rotor, whereby the load applied to the rotor is maintained constant and the rotor can thus be driven with a constant speed, so that the positioning for applying the la el to the inner wall of the mold can be exactly performed.

The cam for controlling the mold clamping operation comprises a stationary cam member disposed on the mold closing controlling side and a movable cam member disposed on the mold opening controlling side. The timing for opening the mold halves is made valiable between the initial operation stage and the normal operation stage in the blow molding process to thereby eliminate the working space, during the normal blow molding period, for treating the scrap such as a fault product which may be produced at the initial stage of the blow molding process.

The stationary cam member for hydraulically clamping the mold halves is further secured to the stationary cam member and the movable cam member for hydraulically clamping the mold halves is further secured to the movable cam member so that the movable cam member for hydraulically clamping the mold halves is movable in synchronism with the movable cam member, whereby the hydraulic pressure supplying period to the hydraulic cylinder unit is made variable between the initial blow molding process and the normal blow molding process.

Accordingly, at the initial blow molding stage, the movable cam is shrunk to make fast the mold opening time to thereby provide a working space for treating the scrap such as a fault product between the mold opening starting station and the product take-out device, and in the meantime, at the normal blow molding stage, the working space is utilized for extending the mold opening time by extending the movable cam member, whereby a product having a high quality with the label applied can be obtained.

The preferred embodiments according to this invention will be described more in detail hereunder with reference to the accompanying drawings.

### BRIEF DESCRIPTION OF THE DRAWINGS

In the accompanying drawings:
Fig. 1 is a schematic view of a rotary blow molding machine to which this invention is applicable;
Fig. 2 is a front view of the machine, partially eliminated, shown in Fig. 1;
Fig. 3 is a righthand side view, partially eliminated, of the machine;
Fig. 4 is a front view of a mold clamping controlling cam used for the blow molding machine;
Fig. 5 is a view being explanatory of the controlling cam at the initial stage of the blow molding process;
Fig. 6 is a front view of the cam shown in Fig. 5;
Fig. 7 is a view being explanatory of the controlling cam at the normal blow molding process;
Fig. 8 is a front view of the cam shown in Fig. 7;
Fig. 9 is a front view, partially in section, of a label applying device of the machine shown in Fig. 1;
Fig. 10 is a sectional view taken along the line X-X in Fig. 9;
Fig. 11 is sectional view taken along the line XI-XI in Fig. 9;
Fig. 12 is a sectional view taken along the line XII-XII in Fig 13, later mentioned, showning a label take-out device of the machine shown in Fig. 1;
Fig. 13 is a sectional view taken along the line XIII-XIII in Fig 12;
Fig 14 is a view viewed in an arrowed direction XIV in Fig. 12;
Fig. 15 is a schematic view of a driving mechanism for driving a label applying mechanism incorporated in the machine shown in Fig. 1; and
Fig. 16 is a schematic view of a label take-out device located in the machine shown in Fig. 1.

### DESCRIPTION OF THE PREFERRED EMBODIMENTS

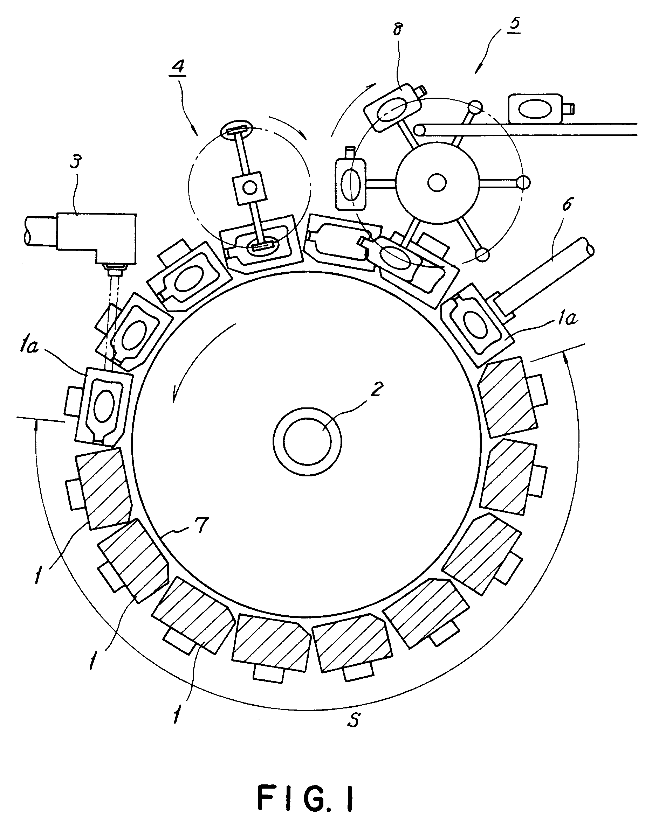

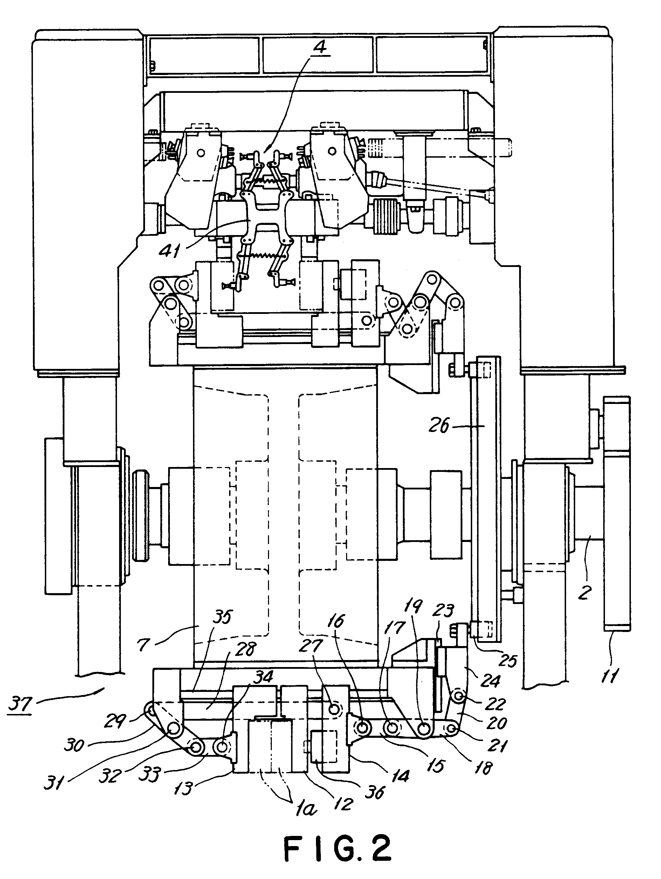

Referring to Fig. 1 showing a rotaty blow molding machine utilizing this invention, reference numerals 1, 1, --- designate a plurality of split mold its which are mounted with constant spaces along the outer peripheral portion of a rotor 7 (shown in Fig. 2) disposed to be rotatable about a rotating axis 2, and each of units comprises a pair of splittable mold halves 1a and 1a. which are closed when they pass a rotating range S shown and opened when they pass the other rotating range. A mechanism for effecting the opening and closing the mold units 1 will be described hereinafter.

A plastic tube such as parison, extruded from an extruding die 3 into the space between the respective bilateral splittable mold halves 1a and 1a of each mold unit 1 is provided with both ends of the inner hollow portion. Both the ends are tightly closed when the mold halves 1a and 1a are closed and an air is blowed into the inner hollow portion by means of a blowing needle located to the split mold unit to form a container having a shape according to the inner wall shapes of the mold halves 1a and 1a.

The formed plastic is to be thereafter cooled by a cooling water passing the interior of the mold halves 1a and 1a, thus being molded as a product 8.

When the mold halves 1a and 1a are opened, a scrap parison remaining between the mold unit 1 (existing between the adjacent products as connecting portion) is first blown off by the air into a scrap receptacle 6 and the product 8 is sucked and taken out by a product take-out device 5 and then transferred on a belt conveyer.

Labels are thereafter arranged on the bilateral inner wall surfaces of the mold halves 1a and 1a by a label arranging device 4. The structure of the label arranging device 4 will be described hereinafter. The labels arranged on the wall surfaces of the mold halves 1a and 1a are integrally fused to the product 8 when the labels are thereafter pressed with highly heated plastic material. In this manner, the product 8 is manufactured with the label applied during the blow molding process.

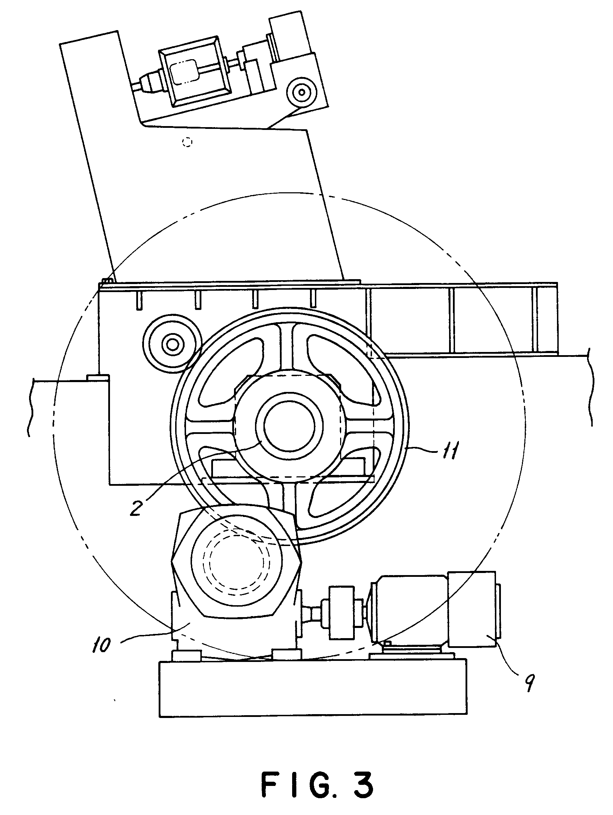

The mechanism of the mold clamping device 37 is be described hereunder with reference to Figs. 2 and 3.

The rotating motion of an electric motor 9 is transmitted to a large gear member 11 secured to the rotating axis 2 through the operation of a reduction motor 10 to drive the rotor 7 secured to the rotating axis 2 at a constant speed.

On one side, i.e. righthand side, of the rotor 7, a cam assembly 26 for controlling the clamping is secured to a machine frame, and a cam follower 25 to be engaged with the cam 26 is journaled to a slide block 24 sliding in the radial direction of the rotor on a guide 23 secured to the rotor 7. In thus manner, the slide block 24 reciprocates in the radial direction in response to the rotation of the rotor 7.

The slide block 24 is operatively connected to one end of a lever 18 through a pin 22, a link 20 and a pin 21 in this order, the lever 18 being provided with a central portion pivotted to a pin 19 disposed on the rotor 7. The other end of the lever 18 is operatively connected to the slider 14 through a pin 17, a link 15 and a pin 16. The slider 14 is supported to be slidable by a guide rod 35 mounted at the outer periphery of the rotor 7 and constitutes a slider-crank mechanism together with the lever 18 and the link 15. Thus, the slider 14 is moved linearly on a guide rod 35 in accordance with the pivoting movement of the lever 18.

The slider 14 is operatively connected to one of the split mold holders 13 through a pin 27, a rod 28, a pin 29, a lever 30, a pin 32, a link 33, and a pin 34 in this order, and the central portion of the lever 30 is journaled to a pin 31 disposed on the rotor 7. The moving directions of both the end portions of the lever 30 are changed, so that the slider 14 and the split mold holder 13 are moved in directions reverse to each other.

The other one of the split mold holder 12 is coupled with the slide 14 through a hydraulic cylinder unit 36 mounted to the slider 14 to be movable in the same direction as that of the movement of the slider 14. Thus, the split mold holders 12 and 13 are driven so as to be apart from or approach to each other. The mold halves 1a and 1a are mounted to the respective mold holders 12 and 13, and the clamping force is applied to the mold halves 1a and 1a by the actuation of the hydraulic cyllinder unit 36.

The hydraulic cylinder unit 36 operates such that the piston rod of the unit is displaced forwardly in accordance with the injection of oil into the cylinder chamber and the piston rod is retracted into the cylinder chamber by means of a spring accommodated in the cylinder when the pressure in a tube communicated with the cylinder chamber is lowered. The oil is supplied into or drained from the cylinder chamber through three-way valves, not shown, of the numbers corresponding to those of the split mold units 1, disposed on the rotor 7. The supply tubes and the drain tubes for the three-way valves are collected and connected to a hydraulic pump or an oil tank through the interior of the rotating axis 2 and a rotary joint member. The three-way valves are actuated by an actuator arranged near the rotor 7.

The three-way valves are operated by the actuator to supply highly pressurised oil into the hydraulic cylinder unit 36 when the link 15 and the lever 18 of the slider-link mechanism are arranged in a line as shown (at the dead position) through the pins 16, 17, 19, and 21 and the mold holders 12 and 13 approach each other. At this moment, the piston rod is displaced forwardly to apply the clamping force to the mold halves 1a and 1a mounted to the respecctive holders 12 and 13. The clamping force is received by the pin 19 and hence is not transmitted to the cam follower 25.

When the three-way valve is actuated by the actuator immediately before the opening of the split mold halves 1a and 1a and the interior of the hydraulic cylinder unit 36 is communicated with the drain tube, the piston is displaced backwardly by the biasing force of the spring disposed in the hydraulic cylinder unit 36 to thereby drain the oil in the cylinder unit as well as to draw in the piston rod to release the clamping pressure. Under these condition, the split mold halves 1a and 1a are opened as shown on the upper portion of Fig. 2 by the operations of the cam 26 and the cam follower 25, but the clamping pressure is not transferred to the cam assembly 26 and the cam follower 25, so that the contact pressure to be applied thereto is small.

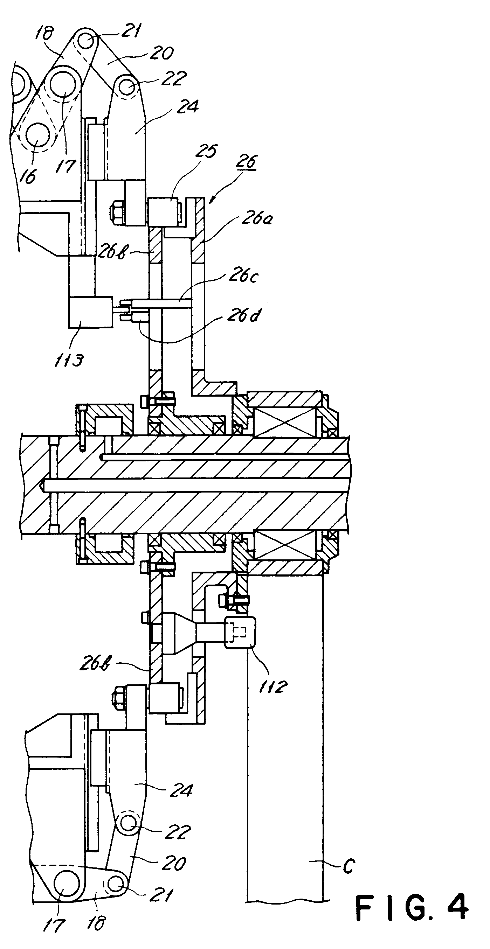

The structure of the cam assembly 26 described above will be explained hereunder with reference to Fig. 4

The cam assembly 26 serves to control the closing or opening time or the mold halves 1a and 1a as described hereinbefore, and the cam assembly 26 comprises a stationary cam member 26a for controlling the mold closing time and a movable cam member 26b for controlling the mold opening time, the movable cam member 26b being positioned at a portion opposing the stationary cam member 26a and rotated by the actuation of a cam driving hydraulic cylinder 112 having a base portion journaled by the machine frame c.

A stationary cam member 26c for carrying out the hydraulic clamping operation is mounted to the stationary cam member 26a and a movable cam member 26d is mounted to the movable cam member 26b for carrying out the hydraulic clamping operation in synchronism with the movement of the movable cam member 26b.

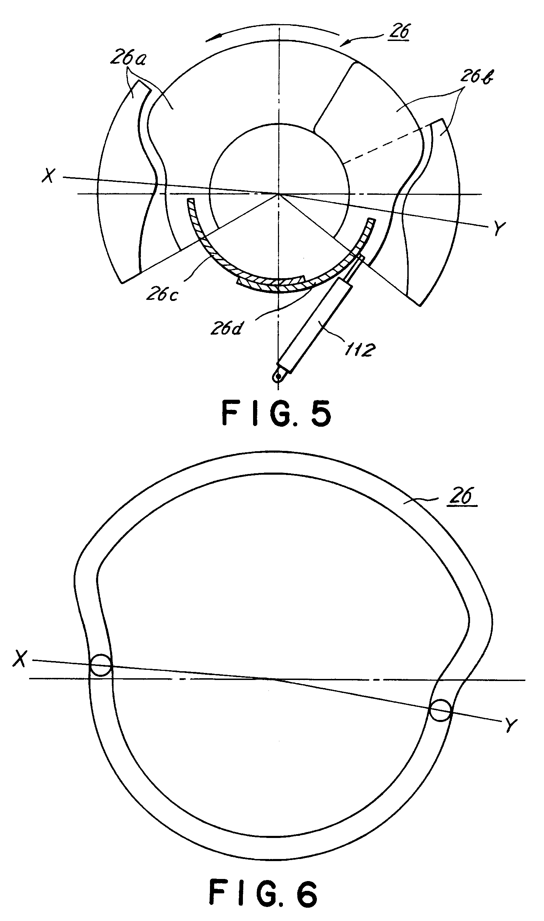

Fig. 5 is a view showing the condition of the cam 26 in the initial stage in the blow molding process, in which the cam driving hydraulic cylinder 112 is not operated and the movable cam members 26b and 26d are rotated by the rotation of the piston rod. The split mold unit 1 is rotated, from the position X representing the time at which the mold halves 1a and 1a are completely closed under the control of the stationary cam member 26a to the position Y representing the time at which the mold opening operation starts under the control or the movable cam member 26b, with a reduced angle (for example, 175°), whereby the hydraulic pressure supplying period for the mold clamping hydraulic cylinder unit 36 is controlled by a hydraulic valve 113 for clamping the mold halves in association with the operations of the stationary cam member 26a and the movable cam member 26b.

Fig. 6 is a view showing the shape of the cam assembly 26 at the initial stage of the blow molding process.

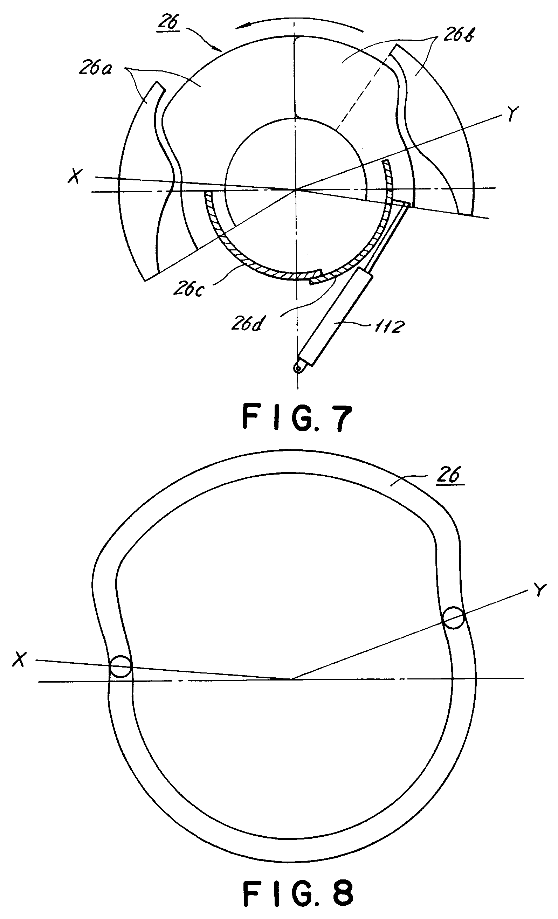

Fig. 7 is a view showing the condition of the cam 26 at the normal blow molding stage after the initial blow molding stage in which the hydraulic cylinder unit 112 for driving the cam is actuated and the movable cam 26b and 26d are rotated in accordance with the forward displacement of the piston rod in association with the actuation of the cylinder unit 112. The rotating angle of the split mold unit 1 for carrying out the blow molding, from the position X representing the time at which the mold halves 1a and 1a are completely closed under the control of the stationary cam member 26a to the position Y representing the time at which the mold halves 1a and 1a are opened, is made large (for example, 205° ),whereby the working space for treating the scrap such as a fault product which may be produced in the initial blow molding stage is adapted in the blow molding period.

Fig. 8 is a view showing the shape of the cam under the normal blow molding period described with reference to Fig. 7.

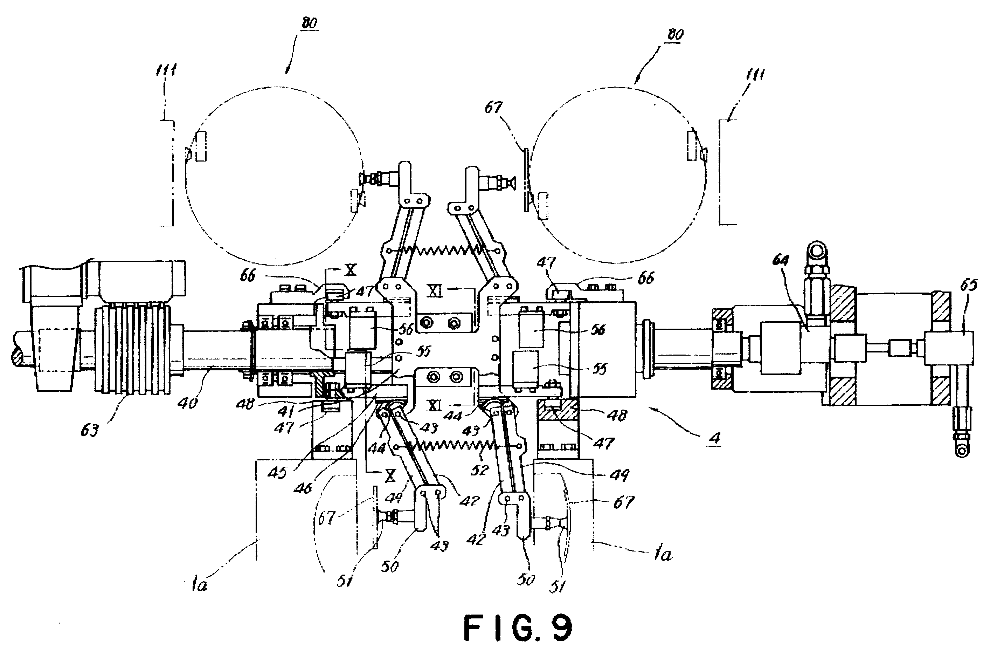

A label arranging mechanism 4 will be described hereunder with reference to Figs. 9 to 11 and Fig. 15.

The label applying mechanism 4 serves to arrange the label or labels on the inner surface or surfaces of the mold halves 1a and 1a in an opened state, and the label arranging mechanism 4 is secured to a rotation axis 40 to be rotatable therewith as shown in Fig. 9.

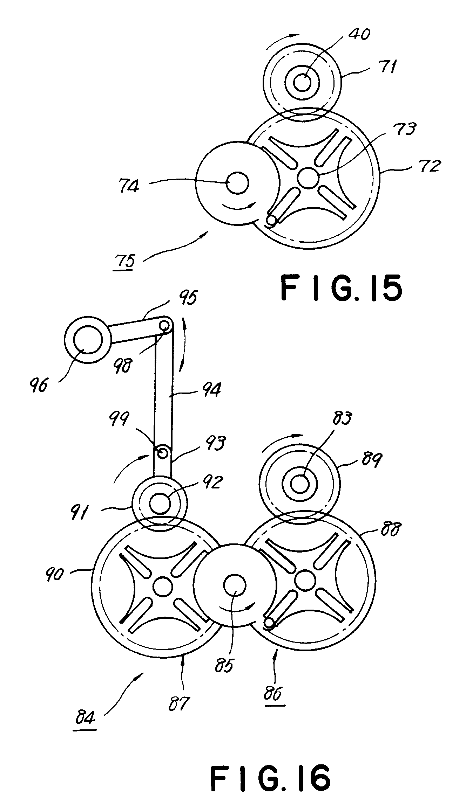

The rotation axis 40 is rotated by a driving mechanism shown in Fig. 15 in a manner such that the rotation axis 40 is rotated in one direction by 180 ° between positions at which rubber cups 51 and 51 secured to the front ends of link mechanism 49 and 49 are opposed to label take-out device 80 and 80 and positions at which the cups 51 and 51 are opposed to the inner walls of the mold halves 1a and 1a (as shown in Fig. 9), the cups being stopped at these positions.

In a modification, four, three or two rubber cups 51 may be located with equal intervals, so that the rotating angle 180 ° of the rotation axis mentioned above may include 90° and 120° .

A driving shaft 74 of the driving device described above is rotated by one rotation during the the transfer by one pitch of the split mold unit 1, and the rotation of the driving shaft 74 is transferred to the shaft 73 through a Geneva stop mechanism 75 so that the shaft is rotated by 90° and then stopped after one rotation of the shaft 73.

The rotation of the shaft 73 is transferred to the rotation axis 40 through the gearings 72 and 71 with the rotation speed ratio of 1 : 2.

Rubber cups 51 and 51 take positions opposing the inner walls of the mold halves 1a and 1a when the mold halves 1a and 1a pass the position shown in Fig. 9.

As shown in Fig. 9, the link mechanisms 42, 45, the lever holder 41, and the dispenser heads 50 are mutually connected by means of pins 43 to constitute four links each in shape of parallelogram. The lever holder 41 is secured integrally with the rotation axis 40.

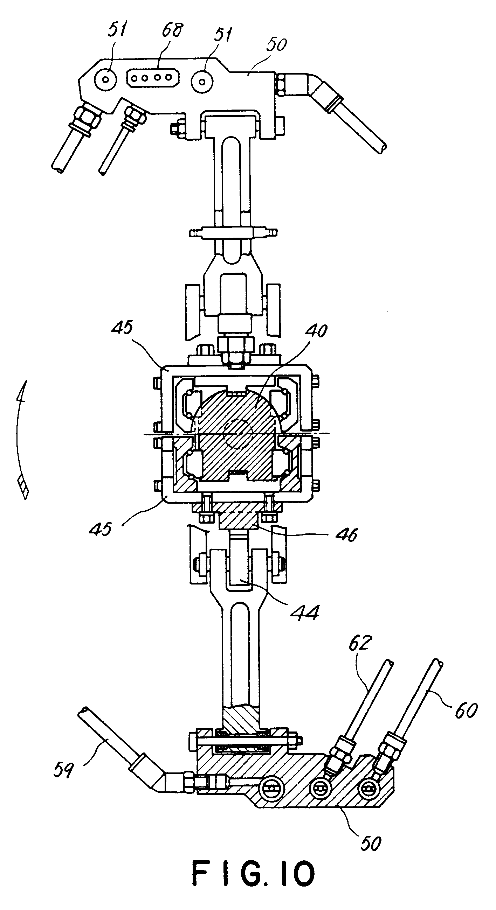

A segment gear 44 secured to the base portion of the link 42 is meshed with a rack 46 secured to a slide block 45, and when the slide block 45 is displaced in the axial direction of the rotation axis 40, the link 42 supported by the lever holder 41 is swung about the pin 43. The slide block 45 is supported in the manner such that the slide block 45 is restricted in the rotating direction and is slidable in the axial direction as shown in Fig. 10.

The link 49 is urged by the tension spring 52 in a direction towards the central portion thereof, but when the cam follower 47 provided for the slide block 45 is pushed by the cam 48 secured to the mold halves 1a and 1a, the slide block 45 is shifted towards the central portion thereof and the link 42 is accordingly swung outwardly through the rack 46 and the segment gear 44. At this time, a label sucked by the rubber cup 51 is set to the inner wall of one of the mold halves 1a as described hereinlater.

An air sucking port is opened to the inner wall of the mold half 1a, and the port holds the label 67, which is then fused to the surface of a product 8.

At a portion above the rotation axis 40, the link of the parallelogram is supported at the predetermined position by the engagement of the cam follower 47 with the cam 66 secured to a bearing unit journaling the rotation axis 40, whereby the label 67 is received by the label take-out device 80.

The dispensing head 50 serves to hand over the label 67 by the vacuum sucking function and the blowing of compressed air. For this reason, the dispensing head 50 for, for example, the front label is provided with two cups 51, 51 and a air jetting nozzle unit 68 as shown in Fig. 10. The rubber cups 51 and 51 are connected to a vacuum pump through flexible hoses 59, 60, an electromagnetic valve 55 and a rotary joint 64. The air jetting nozzle unit 68 is also connected to a compressed air tank through a flexible hose 62, an electromagnetic valve 56, and a rotary joint 65.

In order to stick the labels 67 to the front and rear surfaces of the product 8, another dispensing head for the rear label is located on the same side of the dispensing head for the front label with respect to the rotation axis 40. The rubber cups for the dispensing head for the rear surface are connected to the electromagnetic valve 55 through flexible hoses 57 and 58, and the air jetting nozzle unit of the dispensing head for the rear surface is connected to the electromagentic valve 56 through a flexible hose 61. Other electromagnetic valves are connected to the dispensing heads located on the opposing side with respect to the rotation axis.

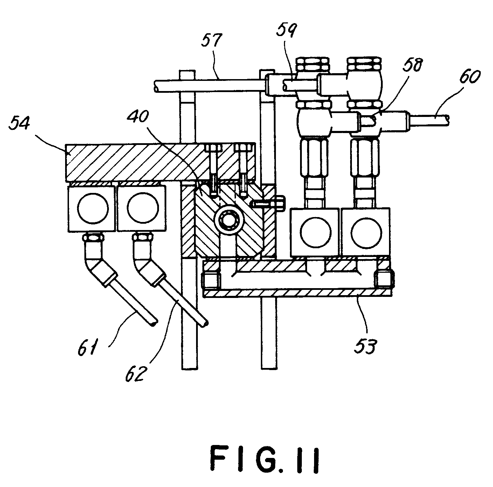

As shown in Fig. 11, these flexible hoses are secured to the rotation shaft 40 through blocks 53 and 54 and communicated with the electromagnetic valves through the inner hollow portion of the rotation shaft 40. These electromagnetic valves are opened or closed by the conduction of the current through a slip ring 63 shown in Fig. 9. The currents passing the electromagnetic valves are controlled by signals generated from a sensor for detecting rotation angle of the rotor 7. When the dispensing head 50 receives the label 67 from the label take-out device 80, the label 67 is sucked by the rubber cup 51 and when the label 67 is positioned at a portion of the inner wall of one mold half 1a, the air is jetted to the label 67 from the air jetting nozzle unit 68.

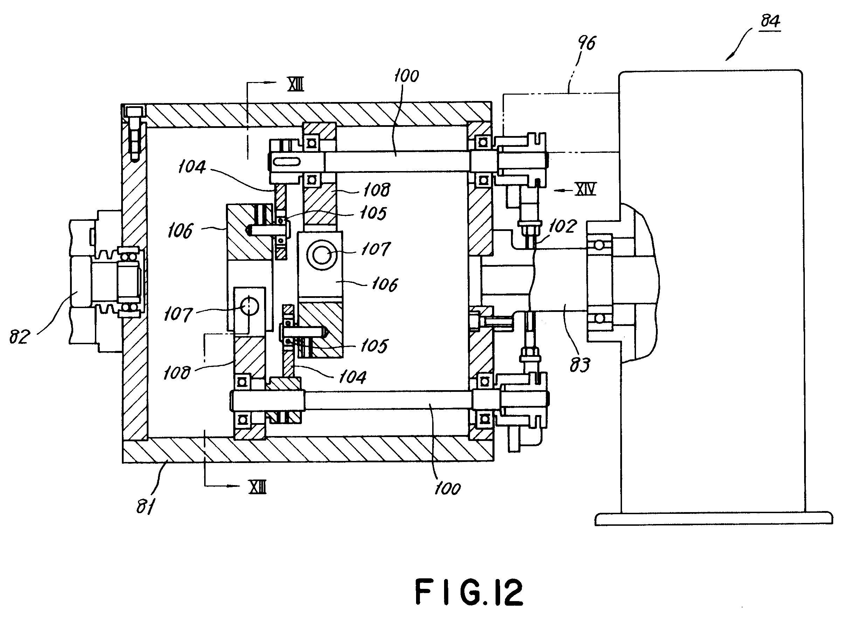

The label take-out device 80 will be described in detail hereunder with reference to Figs. 12 to 14 and Fig. 16.

A frame 81 of the label take-out device 80 is supported by a shaft 82 and a driving shaft 83 so as to be intermittently rotatable by angles of 180° and shaft 96 carries out one reciprocating pivoting movement when the driving shaft 83 stops.

The operation of a driving unit 84 for the label take-out device 80 for driving the shaft 96 and the driving shaft 83 will be described with reference to Fig. 16.

A rotation shaft 85 is driven so as to be rotated by one rotation during the transfer by one pitch of the split mold unit 1 and the rotation of the shaft 85 is transferred so that when the shaft 85 is rotated by one rotation through a Geneva stop mechanism 86 and gearings 88 and 89, the shaft 83 is rotated by 180° and once stopped there and so that when the shalt 85 is rotated by one rotation through a Geneva stop mechanism 87 and gearings 90 and 91, a shaft 92 is rotated by 360 ° and once stopped there. The shaft 92 is also rotated when the driving shaft 83 stops.

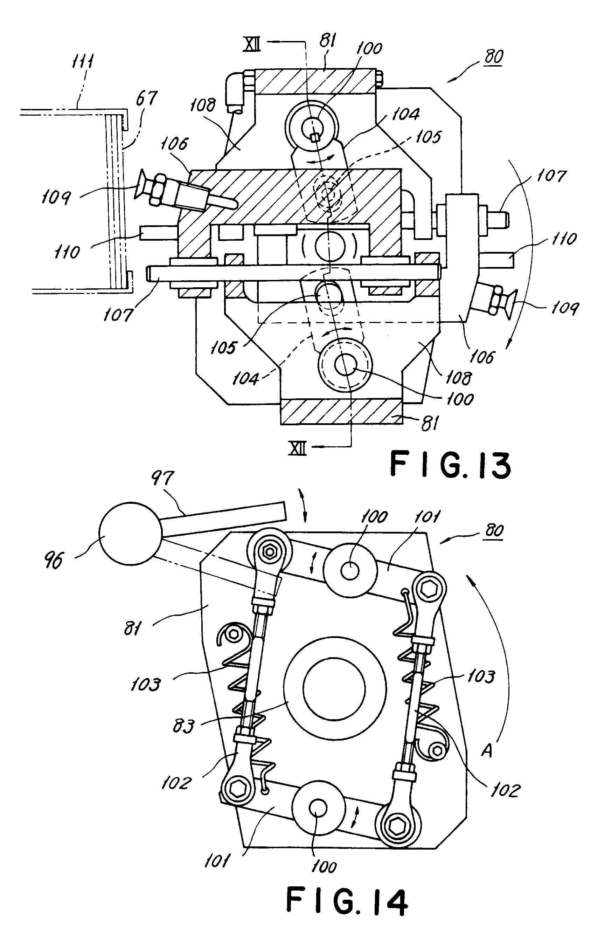

The driving shaft 83 stops at a portion at which the frame 81 secured to the driving shaft 83 as shown in Fig. 13 or 14, that is, at a portion at which rubber cups 109 and 109 of the label take-out device oppose respectively to a label magazine 111 and a label arranging device 4. The shaft 96 carries out one reciprocating pivoting motion through links 93, 94, 95, and pins 98, 99 when the driving shaft 83 stops by means of the rotation shaft 92.

As shown in Fig. 14, a pair of levers 101 and 101 having central portions which are connected to shafts 100 and 100 in an opposing arrangement, and both the ends of the respective levers are mutually coupled by connecting rods 102 and 102 to constitute a parallelogram link mechanism. As shown in Fig. 12, shafts 100 and 100 are supported by the frame 81 and guide rod stays 108 and 108 to be rotatable and the levers 101 and 101 are biased in the same direction by means of tension springs 103 and 103.

As described above, every one reciprocating rotation of the shaft 96, a lever 97 secured to the shaft 96 is swung once between the position shown by solid line in Fig. 14 and the position shown by two-dot and chain line.

During this swinging movement, the lever 101 is pushed and swung to thereby rotate the shafts 100 and 100. The levers 104 and 104 secured to the shaft 100 and 100 are then swung to thereby reciprocate cam followers 105 and 105 which are engaged with the levers 104 and 104, respectively.

The cam followers 105 and 105 are supported by slide blocks 106 and 106, which are supported to be slidable by guide rods 107 and 107 held by guide stays 108 and 108, so that the slide blocks 106 and 106 are reciprocated together with the swinging movement of the levers 104 and 104, respectively.

During this operation, rubber cups 109 and 109 and air jetting nozzle units 110 and 110 receive the labels 67 from the label magazine 111 and transfer the labels to the label arranging device 4, and for carrying out the control of these operation, electromagnetic valves, not shown, are disposed, but the characters of the electromagnetic valves are substantially the same as those described with respect to the label arranging device 4.

The rubber cup 109 thus receiving the label 67 from the label magazine 111 is moved to a position opposing to the label arranging device 4 when the frame 81 is rotated by 180° in an arrowed direction in Fig. 13, and the label 67 is transferred to the label arranging device 4 when the slide block 106 is reciprocated at the next step.

In the embodiment described, the slider-crank mechanism of the mold clamping device may be provided with a split mold holder as a slider, and in this modification, the displacement of the split mold holder is converted to the movement in a direction reverse to this displacement by means of a lever. The movement is transferred to a slider located in opposite to the split mold holder. A hydraulic cylinder unit may be arranged between the latter mentioned slider and another split mold holder. In this modification, substantially the same functions and effects as those described hereinbefore can be attained.

According to the apparatus of this invention, a label is fused at a high temperature to a plastic vessel or container, so that the label can be strongly stuck to the vessel by selecting the material for the label to the same material as that of the plastic vessel, thus the vessel may be suitable for containing food. In addition, the selection of the same material for the label and the vessel can reinforce the material of the vessel, thus saving the material for producing the vessel. Moreover, since the label can be exactly positioned and stuck to the surface of a product, the beautiful appearance of the product can be attained.

Furthermore, a cam for controlling the mold clamping comprises a stationary cam member adapted to close the mold halves and a movable cam member adapted to open the mold halves, so that a working space required at the initial stage of the blow molding for treating a scrap such as a fault product can be applied to the normal blow molding period, whereby cooling effect at the blow molding period can be achieved and a product with high quality can be produced. In addition, a label applying device can be incorporated without reducing the rotation angle for clamping the split mold unit.

Furthermore, at the time of the attachment of the mold halves, the mating of the mold halves, the cutting of scrap parison, or the like, these opearations can be observed without rotating the rotor to the mold clamping position by carrying out the working in the range of the movable cam member, thus remarkably improving the workability.

## Claims

1. A label applying apparatus in a rotary blow molding machine,
the blow molding machine comprising a plurality of split mold units (1) each comprising a pair of splittable mold halves (1a) equidistantly spaced about an outer periphery of a rotor (7) rotatable about a horizontal axis, the mold halves (1a) capable of being opened and closed in the direction of the horizontal axis, the mold halves (1a) being closable about a parison extruded into the halves, means for blowing air into an inner hollow portion of the parison contained within the closed mold halves (1a) to form a hollow product (8), the label applying apparatus (4) comprising a rotatable shaft (74) disposed in parallel to the axis of rotation of the rotor (7) means for intermittently unidirectionally driving the shaft a predetermined angle two parallel link mechanisms (49) secured to the shaft (74) so as to be swingable with an angular interval of 180° with respect to the axis, means (80) for taking a thermally fusible label (67) from a label magazine in which a number of labels are stored,
means (51) attached to the link mechanisms for sucking the label (67) from the label take out means, means for swingably displacing the link mechanisms to positions for transferring the label (67) to a predetermined position on an inner wall of the split mold halves (1a) for application of the highly heated moldable label (67) to the product (8).

2. An apparatus according to claim 1, wherein said label sucking means comprises a dispensing head (50) secured to the link mechanism (49) and a cup (51) secured to the dispensing head (50).

3. An apparatus according to claim 1 or claim 2, wherein the means for swingably displacing the link mechanism (49) comprises a segment gear (44) attached to one of the link mechanisms (49) meshed with a rack (46) provided for a slide block (45) slidable on the rotatable shaft (74) so that the parallel link mechanism (49) are swung by the sliding movement of the slide block (45) on the rotating shaft (74).

4. An apparatus according to claim 2, wherein the cup (51) is made of rubber and adapted to take out the label (67) from the label take-out means (80) in a sucking manner at a stopping position of the rotatable shaft (74).

5. An apparatus according to any one of the preceding claims, wherein the parallel two link mechanisms (49) constitute bilaterally paired assemblies.

6. An apparatus according to claim 1, wherein a pair of mold unit holders (12) for holding bilateral mold halves respectively are slidably supported by a guide rod (35) mounted to the rotor (7), one of the holders (12) being operatively connected to the guide rod (35) through the slidably supported slider (14) and a hydraulic cylinder unit (36) and the other one of the holders (12) being operatively connected to the slider (14) through a lever (30) so as to move in a direction opposite to the movement of the slider (14), the slider (14) being connected to a cam follower engaging with a clamping control cam assembly near the rotor (7) to be movable in a radial direction thereof and to be positioned at a dead position, and a mold clamping device is further located for applying a clamping force to the mold unit holders by the hydraulic cylinder unit when the slider-crank mechanism is positioned at the dead position.

7. An apparatus according to claim 6, wherein clamping control cam assembly is provided with a stationary cam member on a mold close side and a movable cam member on a mold open side, so that a timing of a mold opening is made variable.

8. An apparatus according to claim 7, wherein the stationary cam member is secured to a machine frame of the rotary blow molding machine and the movable cam member is actuated by a hydraulic cylinder assembly having a base portion journaled to the machine frame.

9. An apparatus according to claim 7, wherein a stationary cam member for hydraulically clamping the mold unit is attached to the stationary cam member, a movable cam member for hydraulically clamping the mold unit is attached to the movable cam member such that the movable cam member for hydraulically clamping the mold unit is movable in synchronism with the movable cam member, and hydraulic pressure applying time to the mold clamping hydraulic cylinder assembly is made variable.

## Patentansprüche

1. Etikettiervorrichtung in einer Rotationsblasformmaschine, die eine Mehrzahl von mehrteiligen Formeinheiten (1) aufweist, von denen jede ein Paar teilbarer Formhälften (1a) umfaßt, welche um einen äußeren Umfang eines Rotors (7), der um eine horizontale Achse drehbar ist, in gleichen Abständen voneinander entfernt sind, wobei die Formhälften (1a) in Richtung der horizontalen Achse geöffnet und geschlossen werden können und um einen in die Formhälften hinein extrudierten Külbel schließbar sind, und mit einer Einrichtung zum Einblasen von Luft in einen hohlen Innenbereich des in den geschlossenen Formhälften (1a) enthaltenen Külbels, um ein Hohlprodukt (8) auszubilden, wobei die Etikettiervorrichtung (4) ausgerüstet ist mit einer parallel zur Drehachse des Rotors (7) angeordneten drehbaren Welle (74), einer Einrichtung zum intermettierenden und in eine Richtung orientierten Antreiben der Welle um einen vorgegebenen Winkel, zwei parallele Gelenkmechanismen (49), die derart an der Welle (74) befestigt sind, daß sie mit einem Winkelabschnitt von 180° bezüglich der Achse schwenkbar sind, einer Einrichtung (80) zur Aufnahme eines thermisch schmelzbaren Etiketts (67) aus einem Etikettenmagazin, in dem eine Anzahl von Etiketten gelagert sind, einer an den Gelenkmechanismen angebrachten Einrichtung (51) zum Ansaugen des Etiketts (67) von der Einrichtung zum Herausnehmen des Etiketts und mit einer Einrichtung zum Schwenken der Gelenkmechanismen in Positionen zum Übertragen des Etiketts (67) in eine vorgegebene Position an der Innenwand der getrennten Formhälften (1a) zum Aufbringen des hocherhitzten formbaren Etiketts (67) auf das Produkt (8).

2. Vorrichtung nach Anspruch 1, worin die Einrichtung zum Ansaugen des Etiketts einen an dem Gelenkmechanismus (49) befestigten Abgabekopf (50) und einen an dem Abgabekopf (50) befestigten Becher (51) aufweist.

3. Vorrichtung nach Anspruch 1 oder 2, worin die Einrichtung zum Verschwenken des Gelenkmechanismus (49) ein an einem der Gelenkmechanismen (49) befestigtes Segmentzahnrad (44) aufweist, das in Eingriff mit einer Zahnstange (46) steht, die für einen auf der drehbaren Welle (44) gleitbaren Gleitblock (45) vorgesehen ist, so daß die parallelen Gelenkmechanismen (49) durch die Gleitbewegung des Gleitblocks (45) auf die rotierende Welle (74) geschwenkt werden.

4. Vorrichtung nach Anspruch 2, worin der Becher (51) aus Gummi besteht und derart ausgebildet ist, daß er in einer Haltposition der drehbaren Welle (74) das Etikett (67) durch Ansaugen aus der Einrichtung (80) zum Herausnehmen der Etiketten herausnimmt.

5. Vorrichtung nach einem der vorstehenden Ansprüche, worin die beiden parallelen Gelenkmechanismen (49) zweiseitig gepaarte Anordnungen darstellen.

6. Vorrichtung nach Anspruch 1, worin ein Paar von Formeinheitenhaltern (12) zum Halten von jeweils zweiseitigen Formhälften durch einen an dem Rotor (7) befestigten Führungsstab gleitbar abgestützt wird, wobei einer der Halter (12) im Betrieb über den gleitbar abgestützten Schieber (14) und eine hydraulische Zylindereinheit (36) mit dem Führungsstab (35) verbunden ist und der andere der Halter (12) im Betrieb über einen Hebel (30) derart mit dem Schieber (14) verbunden ist, daß sich ein Bewegen in Gegenrichtung zur Bewegung des Schiebers (14) ergibt, und wobei der Schieber (14) mit einer Exzenterrolle verbunden ist, die mit einer Hubscheibenanordnung einer Einspannsteuerung in der Nähe des Rotors (7) in Eingriff steht, um in radialer Richtung hierzu bewegbar zu sein und um in einer Totlage positioniert zu werden, und wobei ferner eine Formeinspannvorrichtung vorhanden ist, um durch die hydraulische Zylindereinheit eine Einspannkraft auf die Formeinheitshalter auszuüben, wenn sich der Schieber-Kurbel-Mechanismus in der Totposition befindet.

7. Vorrichtung nach Anspruch 6, worin die Hubscheibenenordnung einer Einspannsteuerung auf einer Formschließseite mit einem stationären Nockenelement und auf einer Formöffnungsseite mit einem beweglichen Nockenelement ausgerüstet ist, so daß das Einstellen des Öffnens der Form variabel ist.

8. Vorrichtung nach Anspruch 7, worin das stationäre Nockenelement an einem Maschinenrahmen der Rotationsblasformachine befestigt ist und das bewegliche Nockenelement durch eine hydraulische Zylinderanordnung, von der ein Basisabschnitt an dem Maschinenrahmen gelagert ist, in Betrieb gesetzt wird.

9. Vorrichtung nach Anspruch 7, worin ein stationäres Nockenelement zum hydraulischen Einspannen der Formeinheit an dem stationären Nockenelement sowie ein bewegliches Nockenelement zum hydraulischen Einspannen der Formeinheit an dem beweglichen Nockenelement derart befestigt ist, daß das bewegliche Nockenelement zum hydraulischen Einspannen der Formeinheit synchron mit dem beweglichen Nockenelement bewegbar ist und die Zeit des Ausübens eines hydraulischen Drucks auf die hydraulische Zylinderanordnung zum Einspannen der Form variabel gemacht ist.

## Revendications

1. Dispositif d'application d'une étiquette dans une machine rotative de moulage par soufflage,
la machine de moulage par soufflage comprenant une pluralité d'unités de moule fendu (1), comprenant chacune une paire de demimoules (1a) séparables espacés à équidistance le long d'une périphérie extérieure d'un rotor (7) tournant autour d'un axe horizontal, les demi-moules (1a) pouvant être ouverts et fermés dans le sens de l'axe horizontal, les demi-moules (1a) étant obturables autour d'une ébauche extrudée à l'intérieur des demi-moules, des moyens pour souffler de l'air à l'intérieur d'une partie creuse intérieure de l'ébauche contenue à l'intérieur des demi-moules (1a) fermés pour former un produit creux (8), le dispositif (4) d'application d'une étiquette comprenant un arbre rotatif (74) disposé parallèlement à l'axe de rotation du rotor (7), des moyens pour déplacer l'arbre d'un angle prédéterminé, par intermittence et dans un seul sens, deux mécanismes à mouvement parallèles (49) fixés à l'arbre (74) de façon à être oscillants avec un intervalle angulaire de 180 degrés par rapport à l'axe, des moyens (80) pour saisir une étiquette (67) fusible à chaud dans un magasin à étiquettes dans lequel sont stockées un certain nombre d'étiquettes,
des moyens (51) attachés aux mécanismes à mouvement parallèle pour aspirer l'étiquette (67) hors des moyens de saisie d'étiquette, des moyens pour déplacer par oscillation les mécanismes à mouvement parallèle vers des positions de transfert de l'étiquette (67) à une position prédéterminée sur une paroi intérieure des demi-moules (1a) fendus pour l'application de l'étiquette moulable (67) hautement chauffée sur le produit (8).

2. Dispositif suivant la revendication 1, dans lequel lesdits moyens d'aspiration d'une étiquette comprennent une tête de distribution (50) fixée au mécanisme à mouvement parallèle (49) et une cuvette (51) fixée à la tête de distribution (50).

3. Dispositif suivant la revendication 1 ou la revendication 2, dans lequel les moyens pour déplacer par oscillation le mécanisme à mouvement parallèle (49) comprennent un segment d'engrenage (44) attaché à l'un des mécanismes à mouvement parallèle (49) en prise avec une crémaillère (46) prévue sur un bloc glissant (45) coulissant sur l'arbre rotatif (74), de telle sorte que les mécanismes à mouvement parallèle (49) sont mis en mouvement d'oscillation par le mouvement coulissant du bloc glissant (45) sur l'arbre rotatif (74).

4. Dispositif suivant la revendication 2, dans lequel la cuvette (51) est réalisée en caoutchouc et est apte à saisir l'étiquette (67) hors des moyens de saisie de l'étiquette (80) par aspiration dans une position d'arrêt de l'arbre rotatif (74).

5. Dispositif suivant l'une ou l'autre des revendications précédentes, dans lequel les deux mécanismes à mouvement parallèle (49) constituent des ensembles bilatéralement appariés.

6. Dispositif suivant la revendication 1, dans lequel une paire de supports (12) d'unités de moule pour supporter respectivement des demi-moules bilatéraux sont montés à coulisse sur une tige de guidage (35) montée sur le rotor (7), un des supports (12) étant activement raccordé à la tige de guidage (35) par le curseur monté à coulisse (14) et une unité de cylindre hydraulique (36) et l'autre des supports (12) étant activement raccordé au curseur (14) par un levier (30) de façon à se déplacer dans un sens opposé au mouvement du curseur (14), le curseur (14) étant raccordé à un galet de came appliqué sur un ensemble de came de réglage du serrage à proximité du rotor (7) afin d'être mobile dans une direction radiale de celuici et être positionné en un point mort, et un appareil de serrage des moules est en outre disposé de façon à appliquer une force de serrage aux supports d'unités de moule au moyen de l'unité de cylindre hydraulique lorsque le mécanisme à curseur-manivelle est positionné au point mort.

7. Dispositif suivant la revendication 6, dans lequel l'ensemble de came de réglage du serrage est pourvu d'un organe de came station-naire sur un côté fermé du moule et d'un organe de came mobile sur un côté ouvert du moule, de telle sorte que le rythme d'ouverture du moule est rendu variable.

8. Dispositif suivant la revendication 7, dans lequel l'organe de came stationnaire est fixé à un bâti de machine de la machine rotative de moulage par soufflage et l'organe de came mobile est actionné par un ensemble de cylindre hydraulique ayant une partie de base articulée sur le bâti de la machine.

9. Dispositif suivant la revendication 7, dans lequel un organe de came stationnaire pour serrer hydrauliquement l'unité de moule est attaché à l'organe de came stationnaire, un organe de came mobile pour serrer hydrauliquement l'unité de moule est attaché à l'organe de came mobile, l'organe de came mobile serrant hydrauliquement l'unité de moule est rendu mobile en synchronisme avec l'organe de came mobile , et le temps d'application de la pression hydraulique à l'ensemble de cylindre hydraulique de serrage du moule est rendu variable.
